# EUROPÄISCHE PATENTSCHRIFT

(11) **EP 1 855 498 B1**
(45) Veröffentlichungstag und Bekanntmachung des Hinweises auf die Patenterteilung: **11.11.2009**
(21) Anmeldenummer: 07009130.1
(22) Anmeldetag: 07.05.2007
(51) Int. Cl.: H04W 72/12

(54) **Verfahren zum Scheduling von Datenpaketen und zur Erzeugung von Basisband-Rahmen aus diesen Datenpaketen für eine Funkübertragung**
Method for scheduling data packets and for creating base band frames from these data packets for a radio transmission
Procédé d´ordonnancement de paquets de données et de création de trames de bande de base provenant de ces paquets de données pour une transmission radio

(30) Priorität: 09.05.2006 DE 102006021864
(43) Veröffentlichungstag der Anmeldung: 14.11.2007
(73) Patentinhaber: Deutsches Zentrum für Luft- und Raumfahrt e.V., 51147 Köln (DE)
(72) Erfinder: Parraga Niebla, Cristina, Dipl.-Ing., 82131 Gauting (DE); Brandt, Hartmut, Dipl.-Inf., 82205 Gilching (DE)
(74) Vertreter: von Kreisler Selting Werner

(56) Entgegenhaltungen:
- EP-A- 1 037 398
- FR-A- 2 877 176
- US-A1- 2007 097 852
- XIN LIU ET AL: "Opportunistic Transmission Scheduling With Resource-Sharing Constraints in Wireless Networks" IEEE JOURNAL ON SELECTED AREAS IN COMMUNICATIONS, IEEE SERVICE CENTER, PISCATAWAY, US, Bd. 19, Nr. 10, 1. Oktober 2001 (2001-10-01), XP011055471 ISSN: 0733-8716

## Beschreibung

Die Erfindung betrifft ein Verfahren zum Scheduling von Datenpaketen und zur Erzeugung von Basisband-Rahmen (Baseband-Frames; BB-Frames) aus diesen Datenpaketen für eine Übertragung mittels Funk zwischen einem Sender und mehreren empfangenden Nutzerendgeräten, wobei der Sender sowie die empfangenden Nutzerendgeräte ACM (Adaptive Coding and Modulation) auf einer Rahmen-zu-Rahmen-Basis unterstützen und geforderte QoS(Quality of Service; Dienstgüte)-Garantien eingehalten und die erzeugten Basisband-Rahmen im TDM (Time Division Multiplex; Zeitmultiplex) gesendet werden.

Die hier vorliegende Erfindung definiert insbesondere ein Verfahren zum Auswählen und Sortieren von gepufferten Datenpaketen zur Übertragung in einem Breitband-Funkkanal, der von mehreren Nutzern nach TDM-Betriebsweise geteilt wird, wobei der Sender und die Empfänger ACM auf einer Rahmen-zu-Rahmen (Frame-to-Frame)-Basis unterstützen und QoS-Garantien erforderlich sind.

"Adaptive Coding and Modulation" (ACM) ist eine Methode der Datenübertragung, bei welcher der Empfänger eine Rückmeldung über die Qualität der empfangenen Daten und damit über die Übertragungskanalbedingungen gibt und darüber die anzuwendende Datencodierung und Datenmodulation des Datenübertragungskanals anpasst. Beispielsweise wird ACM bei DVB-S2 eingesetzt, wobei der Rückkanal terrestrisch oder über Satellit aufgebaut ist.

In jedem beliebigen Datenübertragungssystem mit TDM-Zugriff und ACM werden die Nutzerdatenpakete in codierten und modulierten Rahmen getragen, die von fester oder variabler Länge sein können. Abhängig von der Nutzlast(Payload)-Länge der Rahmen kann jeder Rahmen mehrere Datenpakete tragen, wobei jedes von diesen dem gleichen oder verschiedenen Zielendgeräten entspricht. Darüber hinaus sind das Modulationsschema und die bei jedem Rahmen angewandte Codierrate unabhängig von vorhergehenden oder nachfolgenden Rahmen.

Die Auswahl eines Modulationsschemas und der Codierrate für eine Übertragung hängt von den Funkkanalbedingungen des Nutzerendgeräts ab, das die übertragenen Daten empfangen sollte. Im allgemeinen können, wenn dem Nutzerendgerät gute Kanalbedingungen zufallen, Modulationen von hoher Ordnung und hohe Codierraten für die Übertragung verwendet werden, so dass für eine feste Menge von Nutzerdaten weniger Funkressourcen erforderlich sind. Auf der anderen Seite müssen, wenn dem empfangenden Nutzerendgerät schlechte Kanalbedingungen, z.B. wegen Schwunderscheinungen (Fading), zufallen, Modulationen von niedrigerer Ordnung und niedrige Codierraten verwendet werden, um ein Anwachsen der Bitfehlerrate (BER; Bit Error Rate) zu verhindern, so dass für eine feste Menge von Nutzerdaten mehr Funkressourcen erforderlich werden. Diese Flexibilität erlaubt unter anderem das Reduzieren der erforderlichen Kapazität für die Übertragung, wenn der Übertragungskanal unter guten Bedingungen steht.

Nichtsdestoweniger werden dadurch auch neue Freiheitsgrade bei der Auslegung eines Funkressourcen-Betriebsmanagements eröffnet. In typischer Weise werden Funkressourcen-Betriebsmanagement-Mechanismen so ausgelegt, dass für QoS-Garantien bei den auf das gemeinsame Medium zugreifenden Nutzern gesorgt ist. In einem Übertragungssystem, das ACM unterstützt, sollte der Funkxessourcen-Setriebsmanagement-Mechanismus jedoch auch dazu in der Lage sein, die potentiellen Vorteile der durch ACM erzielbaren Anpassung des Übertragungsmodus an die Kanalbedingungen auszunutzen, um Kapazität zu gewinnen. Darüber hinaus sollte ebenso ein Neutralitätskonzept (Fairness) betrachtet werden, um zu vermeiden, dass Übertragungen, die Nutzerendgeräten unter schlechten Kanalbedingungen entsprechen, fortwährend verzögert werden oder ihre Datenpakete umfassend fallengelassen werden.

Demgemäß ist das Sortieren der im Sender gepufferten Datenpakete für die Übertragung und die Auswahl der Datenpakete, die in jedem neuen Rahmen übertragen werden sollten, ein entscheidender Punkt für den effizienten Gebrauch der Funkressourcen und für die Bereitstellung der QoS-Garantien und der Neutralität (Fairness) bei den empfangenden Nutzerendgeräten, die im Rückstand befindliche Datenpakete im Sender haben.

Es sind bereits sogenannte Scheduling-Techniken für Funkübertragungsnetze, sowohl für terrestrische Systeme als auch für Satellitensysteme, bekannt. Es lassen sich beim Scheduling-Mechanismus verschiedene Kriterien anwenden, um auszuwählen, welchem empfangenden Endgerät die Funkressourcen zu jedem Zeitpunkt gewährt werden sollten. In einem System, in dem sich die Nutzer das Medium in einer TDM-Betriebsweise gemeinschaftlich teilen, haben die beim Sender gepufferten Datenpakete verschiedene Ziele, d.h. empfangende Nutzerendgeräte, weswegen die Datenpakete zur Übertragung in der Praxis gemäß bestimmten Kriterienmitteln sortiert werden, um zu entscheiden, welchen Nutzerendgeräten die Funkressourcen zum Empfang zu jedem Zeitpunkt gewährt werden sollen.

Die für terrestrische Funknetze vorgeschlagenen Scheduling-Techniken sind in typischer Weise darauf gerichtet, im Vergleich zu drahtgebundenen Netzen Leistungsverbesserungen zu erreichen, können aber in Satellitensystemen nur ziemlich beschränkt arbeiten.

Mehrere vorgeschlagene Scheduling-Techniken für terrestrische paketorientierte Funknetze sind im Artikel von Y. Cao, V. Li: "Scheduling Algorithms in Broadband Wireless Networks", IEEE Proceedings, Vol. 89, No. 1, Januar 2001, besprochen. Diese Scheduling-Techniken sehen verschiedene Varianten des gleichen Grundprinzips vor: Aufschieben von Übertragungen, die sich an Nutzerendgeräte in schlechten Kanalzuständen richten, und Abhilfe durch Kompensationsmaßnahmen, wenn ihre Kanäle wieder in einem guten Zustand sind. Unter den Nutzern in gutem Kanalzustand wendet der Scheduler eine QoS- oder neutra-J.itätsbasierte Lösung an. Diese Lösungen weisen eine Anzahl von Nachteilen auf.

Sie setzen voraus, dass es nur zwei Übertragungskanalzustände gibt, wobei diese als fehlerhafter Kanal bzw. als fehlerfreier Kanal interpretiert werden. Überdies übertragen diese bekannten Lösungen niemals Daten von Nutzern in schlechtem Kanalzustand. Realistischer wäre die Betrachtung, dass jedem Fehlerzustand, also sogar guten Kanalzuständen, eine bestimmte Fehlerwahrscheinlichkeit zugeordnet ist, was mehr Flexibilität bei den Scheduling-Entscheidungen ermöglicht. Des weiteren soll das betrachtete System ACM unterstützen, so dass die Robustheit der Übertragung an den wahrgenommenen Kanalzustand angepasst werden kann, um eine Bitfehlerwahrscheinlichkeit zu gewährleisten, die einen Qualitätsschwellenwert nicht überschreitet. Mit anderen Worten, durch Ansetzen geeigneter Modulationsschemata und Codierraten für jede Übertragung haben alle Übertragungen die gleiche Fehlerwahrscheinlichkeit. Daher sind die in dem vorstehend genannten Artikel vorgeschlagenen Scheduling-Techniken in Systemen, die ACM unterstützen, nicht relevant. Dies bedeutet, dass die dort angesprochenen Scheduling-Techniken nicht in der Lage sind, die Flexibilität und potentiellen Kapazitätsgewinne von ACM auszunutzen.

Diese bekannten Scheduling-Techniken setzen auch voraus, dass die Ressourcen auf einer Paket-zu-Paket-Basis gewährt werden, d.h. ein Nutzerendgerät sendet in einem Zeitschlitz. In dem durch die vorliegende Erfindung betrachteten System sollen Datenpakete in Rahmen getragen werden, die mehrere Datenpakete enthalten können, die verschiedenen Nutzern entsprechen. Die im vorgenannten Artikel angesprochenen Scheduling-Techniken können auch bei einem TDM-System angewandt werden, das Ströme von Rahmen (nicht notwendigerweise von konstanter Länge) überträgt, aber die Mechanismen zum Kompensieren der schlechten Perioden jedes Nutzers würden beschädigt werden.

Die verschiedenen in dem vorher genannten Artikel behandelten Kompensationsmechanismen für Blockierungsperioden beruhen auf der Annahme, dass jeder beliebige Nutzer irgendwann einmal zu einem guten Kanalzustand kommt. In terrestrischen Funknetzen mit schnellen Kanalveränderungen könnte dies zutreffen, ohne dass die QoS-Garantien dramatisch beeinträchtigt werden, da sich der Kanalzustand schneller als die Verzögerungen ändert, die die Nutzer wahrnehmen können. Die Kanalzustandsänderungen bei einem beispielsweise im Ku- oder Ka-Band arbeitenden Satellitenfunksystem sind allerdings vergleichsweise langsam, zumeist infolge von Regenschwund. Die direkte Konsequenz besteht darin, dass im Fall einer Anwendung von Scheduling-Techniken wie denjenigen, die in dem vorgenannten Artikel vorgeschlagen sind, in einem Satellitenfunksystem, wie es vorstehend erwähnt wurde, der Scheduler in der Größenordnung von Sekunden, vielleicht auch von Minuten, auf das Gewähren von Ressourcen wartet. Dies behindert die Existenz von QoS-Garantien und deswegen sollten solche Lösungen in Satellitenfunksystemen nicht angewandt werden.

Im Artikel von Y. Cao, V. Li: "Wireless Packet Scheduling for Two-state Link Models", Proc. of IEEE Global Telecommunications Conference Globecom'2002, 17.-20. November 2002, Taipeh (Taiwan), sind Verbesserungen für zwei der hier bereits vorher abgehandelten Mechanismen vorgeschlagen, nämlich das sogenannte Channel-Condition Independent Packet Fair Queueing (CIFQ) und das sogenannte Wireless Fair Service (WFS), welche die guten und schlechten Kanalzustände jeweils mit einer bestimmten Übertragungsfehlerwahrscheinlichkeit in Beziehung setzen, wobei also davon ausgegangen wird, dass schlechte Übertragungskanäle auch Kapazität aufbringen können. Selbst wenn diese Verbesserung angenommen wird, so betrachten beide Algorithmen noch das Scheduling auf einer Paket-zu-Paket-Basis und beruhen noch auf Kompensationsmechanismen für schlechte Perioden, die sich aus schnellen Kanalzustandsänderungen ergeben. Es ist somit auch hier die Schlussfolgerung zu ziehen, dass diese für terrestrische Funkübertragungssysteme bekannten Scheduling-Techniken in einem Satellitensystem mit ACM nicht angewendet werden sollten.

Die in dem Artikel von X. Liu, E. Ching, N. Schroff: "Opportunistic Transmission Scheduling with Resource Sharing Constraints in Wireless Networks", IEEE Journal on Selected Areas in Communications, Vol. 19, No. 10, 10. Oktober 2001, vorgeschlagene opportunistische Scheduling-Strategie zielt darauf ab, zur Übertragung denjenigen Nutzer auszuwählen, der die Kanaleffizienz zu jedem Zeitpunkt aus einer Untermenge von aktiven Nutzern maximiert, die eine spezifische Nebenbedingung, z.B. eine QoS-Anforderung oder die Neutralitätsbedingung, erfüllt. Es wird ein auf Zeitschlitzen beruhendes System betrachtet, bei dem die Zeit die von allen aktiven Nutzern zu teilende Ressource mit der Beschränkung ist, dass nur ein einziger Nutzer in einem Zeitschlitz übertragen darf. Jede beliebige Ressourcenzuardnungsfunktion, schreibt den Zeitanteil vor, den jeder Nutzer im Kanal übertragen sollte. Diese Zuordnung soll auf den QoS-Anforderungen einer Sitzung beruhen. Ist diese Nebenbedingung gegeben, so wählt nun der Scheduler für jeden Zeitschlitz aus, welcher Nutzer aus der Menge von Nutzern, die die Nebenbedingung erfüllen, unter Maximierung der Kanaleffizienz übertragen sollte. Dies bedeutet, dass für den nächsten Zeitschlitz der Nutzer mit den besten Kanalbedingungen innerhalb der Nutzeruntermenge ausgewählt wird, die noch nicht ihren vollständigen Ressourcenanteil erhalten hat.

Entsprechend dieser Auswahl von Nutzern zur Übertragung wird die Kanaleffizienz in jedem Zeitschlitz maximiert. Die Gesamtkanaleffizienz entlang einem bestimmten, eine große Anzahl von Zeitschlitzen enthaltenden Zeitfenster kann jedoch nur maximiert werden, wenn die erfahrene Kanalzustandsänderung bei jedem Nutzer schnell genug ist. Dies bedeutet, dass, wenn der Kanalzustand eines Nutzers dazu neigt, während des Zeitfensters stationär zu bleiben, was bei im Ku- oder Ka-Band betriebenen Satellitensystemen der Fall ist, es nicht relevant ist, in welchem Zeitpunkt dieser Nutzer einen Zeitschlitz gewährt bekommt. In diesem Fall sorgt das opportunistische Scheduling für keinerlei Vorteile.

Eine andere Scheduling-Technik ist in dem Artikel von T. Kolding: "Link and System Performance Aspects of Proportional Fair Scheduling in WCDMA/HSDPA", Proc. IEEE VTC-Fall 2003, 4.-9. Oktober 2003, Orlando, Florida (USA), vorgeschlagen, nämlich der sogenannte Proportional Fair Scheduler (PF), der auf das Maximieren des Durchsatzes abzielt, während ein neutraler Zugang zu den Ressourcen unter den Nutzern als Kompromisslösung gewährt wird und die verfügbare Kapazität betrachtet wird, wenn ACM angewandt wird. Dies wird erreicht, indem für jeden Datenfluss ein Parameter berechnet wird, der für den erreichbaren Durchsatz eines einzelnen Nutzers entsprechend seinem Kanalzustand und dem angewandten Modulationsschema und der angewandten Codierrate und für den Dienst steht, den dieser Nutzer bis dahin kompromissweise zustande gebracht hat. Dies erfordert eine hohe Rechenleistung für die Berechnung des Entscheidungsparameters. In einem terrestrischen zellularen Netz könnte dies unter der Voraussetzung einer beschränkten Menge von Nutzern, die gleichzeitig in der Abdeckungsfläche einer Zelle sein können, zutreffen. Im Gegensatz dazu ist die Abdeckungsfläche einer Zelle in einem betrachteten Multi-Spotbeam-Satellitensystem groß genug, um ein vollständiges Gebiet abzudecken. Die potentielle Menge von gleichzeitigen Nutzern in der Zelle ist sehr groß, so dass die Berechnungskomplexität einschränkend ist.

Der PF-Scheduler beruht überdies auf einem Zeitschlitz-System, das Daten eines Nutzers in einem Zeitschlitz überträgt. Im betrachteten Satellitenfunkfall könnten mehrere Nutzer Datenpakete im gleichen Rahmen übertragen. Darüber hinaus werden entsprechend dem Neutralitätsmechanismus des PF-Schedulers Nutzer mit niedriger Dienstrate in ihrer Historie bevorrechtigt. Dies bedeutet, dass zwei aufeinanderfolgend ausgewählte Datenpakete im allgemeinen verschiedene Übertragungsmodi (Modulationsschemata und Codierraten) erfordern, um die spezifizierten Bitfehlerwahrscheinlichkeiten zu garantieren. Wenn diese Datenpakete im selben Rahmen übertragen werden, muss der Übertragungsmodus des eingeschränktesten Nutzers verwendet werden, um noch dazu fähig zu sein, die angestrebte Bitfehlerwahrscheinlichkeit zu garantieren. Wird dies getan, so können die Endgeräte in guten Kanalzuständen ihre spezifizierten Datenraten jedoch nicht erreichen, da sie durch die den gleichen Rahmen teilenden Nutzer in schlechten Kanalbedingungen eingeschränkt sind. Dieser Effizienzverlust ist als schwerwiegender Nachteil anzusehen, da er Hindernisse in Bezug auf den potentiellen Kapazitätsgewinn von ACM auferlegt und statistisch erwartet werden kann, dass es in jedem Rahmen ein Datenpaket gibt, das zu einem Nutzer in schlechten Kanalbedingungen gehört.

Es sind auch bereits für Satellitenfunksysteme Scheduling-Techniken vorgeschlagen, die ACM unterstützen. Eine einfachere Lösung ist in dem Artikel von G. Gallinaro, A. Vernucci, G. Corazza, R. Rinaldo, A. Paraboni: "A Comprehensive Assessment Tool for Satellite Systems Embodying Adaptive Coding and Modulation Techniques: Implementation Approach and Main Results", Proc. 23d AIAA International Communications Satellite Systems Conference (ICSSC' 05), Rom (Italien), 25.-28. September 2005, beschrieben. Diese Lösung besteht darin, die Datenpakete entsprechend ihrer QoS-Klasse, z.B. unter Verwendung eines Weighted-Round-Robin(WRR)-Schedulers, zu planen, die Datenpakete entsprechend der durch den Scheduler definierten Ordnung in Rahmen abzubilden und den Modulations- und Codierratensatz (ModCod) jedes Rahmens auf das beschränkteste der im jeweiligen Rahmen getragenen Datenpakete zu setzen. Diese Lösung aus der Satellitennetztechnik nutzt die Dynamik von ACM offensichtlich nicht aus, da sie diese geradezu ignoriert. Diese Lösung wird jedoch als Bezugsszenario in Betracht gezogen, um den Effizienzgewinn von anderen vorgeschlagenen Lösungen zu messen.

In dem vorgenannten Artikel wird noch eine andere Scheduling-Lösung eingeführt, die dahingehend orientiert ist, den potentiellen Effizienzgewinn durch Anwendung von ACM auszunutzen, und sehr ähnlich ist wie diejenige, die in dem Artikel von C. Párraga, C. Kissling: "Design and Performance Evaluation of Efficient Scheduling Techniques for Second Generation DVB-S Systems", Proc. 23d AIAA International Communications Satellite Systems Conference (ICSSC'05), Rom (Italien), 25.-28. September 2005, vorgeschlagen wird. In beiden Fällen werden zuerst Datenpakete entsprechend ihrer QoS-Klasse geplant.

Die sortierten Datenpakete werden dann wieder entsprechend ihrem laufenden ModCod gepuffert und erneut geplant. In dem ersten dieser Systeme ruft der zweite Scheduler die Datenpakete wieder ab, die den gleichen ModCod wie dasjenige haben, das einen neuen Rahmen aufmacht. In dem zweiten dieser Systeme führt der erste Scheduling-Schritt ein Scheduling entsprechend dem QoS für die Datenpakete in einem spezifischen ModCod getrennt von anderen ModCods aus, so dass geplante Datenpakete in jedem ModCod wieder in Warteschlangen gepuffert werden, die einen einzigen ModCod akzeptieren. Die Datenpakete in diesen Warteschlangen werden gruppiert, um die Nutzlast eines Rahmens zu bilden, und diese Nutzlasten werden geplant, als wären sie PDUs (Protocol Data Units; Protokolldateneinheiten von Schichten im OSI-Modell), die codiert, moduliert und übertragen werden sollen.

Die beiden letztgenannten bekannten Lösungen erfordern das Sortieren von Datenpaketen entsprechend QoS und ModCod. Der jedem Datenpaket zugeordnete ModCod ist nach Ankunft des Datenpakets im System fest. Während der Zeitdauer, die ein Datenpaket für die Übertragung wartet, könnte sein entsprechender Nutzer den ModCod umschalten, wenn sich seine Kanalbedingungen ausreichend ändern. Das Datenpaket kann nicht in eine Warteschlange umgeordnet werden, die durch den neuen ModCod gekennzeichnet ist. Daher gilt, dass, je länger die Warteschlangenverzögerung ist, um so höher die Wahrscheinlichkeit ist, dass das Datenpaket in einem Rahmen mit dem falschen ModCod übertragen wird. Wenn der neue ModCod niedriger als der vorhergehende ist, dann gehen die Daten mit hoher Wahrscheinlichkeit verloren. Dies kann durch Anwendung größerer Spielräume beim Physical-Layer-Algorithmus vermieden werden, der den besten ModCod für einen spezifischen Kanalzustand auswählt. Eine solche Lösung beschränkt jedoch die Dynamik von ACM unmittelbar.

Gemäß dem Artikel von F. Vieira, M.A. Väzquez Castro: "Tunable Fairness-based Capacity Allocation for Satellite Systems with Adaptive Physical Layer", Proc. 23d AIAA International Communications Satellite Systems Conference (ICSSC'05), Rom (Italien), 25.-28. September 2005, wird bei der Auslegung eines Schedulers ein Neutralitätskonzept angewandt, das eine zu den Kanalbedingungen transparente Übertragung sicherstellt. Dies wird durch Klassifizieren der Datenpakete in durch Konfiguration in einer physikalischen Schicht gekennzeichneten Warteschlangen und Planen der Datenpakete in diesen Warteschlangen mit einem WRR-Scheduler erreicht, wobei dessen Gewichte umgekehrt proportional zu seiner entsprechenden spektralen Effizienz sind. Um Vorteil aus der Nutzerdiversität zu ziehen, wenn die Anwendungen keine Stärkenverzögerungsnebenbedingungen haben, wird überdies ein Abstimmexponent bei den WRR-Gewichten zugeführt, um für einen höheren Durchsatz zu den Nutzern mit guten Kanalbedingungen im Vergleich zu Nutzern mit schlechten Kanalbedingungen zu sorgen.

Diese bekannte Lösung zieht Nutzen aus der Nutzerdiversität und dem potentiellen ACM-Kapazitätsgewinn für jene Datenflüsse, die auf spezifische QoS-Anforderungsverschlechterungen nicht ansprechen. Sie hat jedoch zwei Nachteile, welche die Wirksamkeit einschränken. Der erste Nachteil besteht darin, dass Datenpakete entsprechend ihrem ModCod nach Ankunft beim System sortiert werden müssen, weswegen diese Scheduling-Technik die gleichen Nachteile aufweist wie die Scheduler, die in den bereits angegebenen Artikeln von C. Pärraga et al. und von G. Gallinaro et al. diskutiert wurden. Zum zweiten sortiert der Scheduler zusätzlich die Datenpakete entsprechend den zugewiesenen Gewichten zu den Warteschlangen, ohne zu versuchen, die Datenpakete mit gleichem ModCod zu sortieren. Dies bringt entweder die Bildung von nicht-vollen Rahmen oder das Verschachteln von Datenpaketen mit verschiedenen ModCods im gleichen Rahmen mit der entsprechenden Notwendigkeit mit sich, den ModCod von einigen Datenpaketen zu verschlechtern.

Die bisher vorgeschlagenen, bekannten Scheduling-Techniken für terrestrische Funknetze weisen Nachteile auf, wenn sie bei Satellitenfunknetzen angewandt werden.

Sie beruhen auf schnellen Kanalzustandsveränderungen, um Nutzerdiversität anzuwenden. Nutzer bekommen den Übertragungskanal nur gewährt, wenn sie in gutem Kanalzustand sind, und es wird eine Kompensationsstrategie angewandt, um den Nutzern dann, wenn sie wieder gute Kanalbedingungen erhalten, diejenigen Ressourcen zu geben, die sie während Schwundphasen nicht bekommen haben. In einem Satellitenfunksystem mit langsamen Kanalzustandsveränderungen, wie im Fall des hier in Betracht gezogenen Szenarios, bringt dies eine Verletzung von QoS-Anforderungen, da mehrere Nutzer während langer Zeitperioden übertragungsmäßig abgeschnitten werden können, da der Schwund Sekunden, sogar Minuten andauern kann.

Ihre Berechnungskomplexität nimmt im allgemeinen mit der Menge der verbundenen Nutzer zu. Dies ist ein schwerwiegender Nachteil in Satellitenfunksystemen mit zellularen, mit vollständigen Gebieten übereinstimmenden Abdeckungsbereichen mit mehreren tausend potentiellen Nutzern, die gleichzeitig am Netz angeschlossen sind. Dies gilt insbesondere beim proportionalen neutralen Scheduling.

Wie bereits vorher erwähnt worden ist, setzen sie auch voraus, dass die Ressourcen auf einer Paket-zu-Paket-Basis gewährt werden, d.h. ein Nutzer überträgt in einem Zeitschlitz. In dem für die Erfindung in Betracht zu ziehenden System werden Nutzerdatenpakete jedoch in Rahmen getragen, die mehrere Datenpakete entsprechend mehreren Nutzern enthalten können. Die bisher vorgeschlagenen, bekannten Scheduling-Techniken könnten auch bei einem TDM-System angewandt werden, das Ströme von Rahmen, zwar notwendigerweise nicht von konstanter Länge, überträgt, jedoch würden Mechanismen zum Kompensieren der schlechten Perioden jedes Nutzers beeinträchtigt werden. Außerdem ist die erreichbare Rahmeneffizienz bei Anwendung von Scheduling-Techniken, die von der Nutzlast-Kapazität eines Rahmens keine Kenntnis haben, zweifelhaft.

Auch die in der Literatur zur Anwendung bei ACM-unterstützenden Satellitenfunksystemen vorgeschlagenen Scheduling-Techniken haben Nachteile.

So ignoriert die Bezugsstrategie vollständig die Anwendung von ACM. Sie sortiert die Datenpakete entsprechend den QoS-Nebenbedingungen und verschachtelt Datenpakete mit verschiedenen anwendbaren Modulationsschemata und Codierraten im gleichen Rahmen, was einen Rückschritt der Modulation und Codierraten aller Datenpakete im Rahmen auf die beschränktesten erzwingt. Dies erlaubt nicht die Ausnutzung irgend eines Vorteils von ACM.

Alle diesbezüglich vorgeschlagenen Strategien, außer der Bezugsstrategie, beruhen auf der Klassifizierung von Datenpaketen entsprechend QoS und gültigem ModCod. Während der Zeit, in der Datenpakete auf die Übertragung warten, könnten sich jedoch die Kanalbedingungen einiger der Nutzerendgeräte, die jene Datenpakete empfangen sollten, ausreichend ändern, um ihre Physical Layer-Konfiguration, d.h. Modulation und Codierrate, umzuschalten. Nichtsdestoweniger können die im Sender gepufferten Datenpakete nicht in einer Warteschlange entsprechend der neuen optimalen Modulation und Codierrate wiederklassifiziert werden. Dies bedeutet, dass jene Datenpakete unter Verwendung einer veralteten Physical Layer-Konfiguration übertragen werden würden, weswegen zwei Szenarios eintreten könnten:

Wenn sich die Kanalbedingungen verbessert haben, werden die Daten mit höherem Schutz als notwendig übertragen, wobei mehr Bandbreite als erforderlich benutzt wird. Mit anderen Worten, die Ressourcen werden nicht effizient genutzt, also verschwendet.

Wenn die Kanalbedingungen schlechter werden, werden die Daten mit niedrigerem Datenschutz als notwendig übertragen. Dies bedeutet, dass die übertragenen Datenpakete infolge Kanalbeeinträchtigungen mit hoher Wahrscheinlichkeit verloren gehen. Dies hat eine negative Auswirkung auf die Dienstbereitstellung, da Fehlerratengrenzen nicht angeboten werden können.

Darüber hinaus optimiert die im bereits genannten Artikel von F. Vieira, M.A. Vázquez Castro: "Tunable Fairness-based Capacity Allocation for Satellite Systems with Adaptive Physical Layer", Proc. 23d AIAA International Communications Satellite Systems Conference (ICSSC'05), Rom (Italien), 25.-28. September 2005, vorgeschlagene Scheduling-Technik die Rahmeneffizienz nicht. Insbesondere kümmert sich der Scheduler weder um die Nutzlast(Payload)-Kapazität eines Rahmens noch um die Gruppierung von Datenpaketen mit der gleichen optimalen Physical Layer-Konfiguration im gleichen Rahmen. Das Ergebnis ist eine hohe Wahrscheinlichkeit einer Übertragung von Rahmen mit hoher Auffüllkomponente, wenn Datenpakete mit verschiedenen Physical Layer-Konfigurationen nicht im gleichen Rahmen abgebildet werden, oder das Erzwingen einer Verschlechterung der Physical Layer-Effizienz von Nutzern mit guten Kanalbedingungen entsprechenden Datenpaketen, die im gleichen Rahmen wie Datenpakete von Nutzern mit schlechtem Kanalzustand übertragen werden. Diese Effekte begrenzen den potentiellen Kapazitätsgewinn von ACM dramatisch.

Aus FR 2877176 A1 ist ein Verfahren zur Übertragung von Datenpaketen in einem Breitband-Satellitenfunkkanal bekannt, der von mehreren Nutzerendgeräten in TDM-Betriebsweise geteilt wird. Die im satellitenseitigen Sender gepufferten Datenpakete werden zur Übertragung in Abwärtsstreckenrichtung zu den Nutzerendgeräten in codierten und modulierten Rahmen unter Verwendung eines Scheduling getragen und der Sender sowie die Nutzerendgeräte unterstützen ACM auf einer Rahmen-zu-Rahmen-Basis. Außerdem werden geforderte QoS-Garantien eingehalten. Die Datenpakete des eine jeweilige Vorgabe erfüllenden Datenpaketsatzes, der eine bestimmte Modulations- und Codierkonstellationsverteilung aufweist, werden über einen ModCod-Verteiler entsprechend den ModCods der Datenpakete in Datenpaketbehälter sortiert, die jeweils einem ModCod entsprechen und das Fassungsvermögen eines Rahmens aufweisen. Vor ihrer Übertragung im TDM-Strom werden die Rahmen entsprechend jenem ModCod codiert und moduliert, der dem jeweiligen Datenpaketbehälter entspricht. Der hier benutzte Scheduler arbeitet nach dem Warteschlangenprinzip, bei dem ein Zugriff immer nur auf das älteste Element möglich ist und damit stets das erste Datenpaket aus der jeweiligen Warteschlange ausgewählt wird, und läuft kontinuierlich. Dies bedeutet, dass die eingegangenen und vom Sender zu übertragenden Datenpakete vermittelt werden, bis entweder keine Datenpakete mehr vorhanden sind oder die nachfolgende Einheit ein Stoppsignal abgibt (flow-control). Sobald wieder Datenpakete vorliegen und das Stoppsignal nicht mehr vorhanden ist, werden Pakete weitervermittelt. Durch die Verwendung von Warteschlangen beim Scheduling wird zwar eine effiziente Implementierung ermöglicht, jedoch sind die Optimierungsmöglichkeiten stark begrenzt.

Ein hierzu ähnliches Scheduling-Verfahren mit Warteschleifenabwicklung der Datenpakete ist aus EP 1037398 A2 bekannt.

Aufgabe der vorliegenden Erfindung ist es daher, bei einem Datenübertragungsverfahren ein Scheduling (Planen) von Datenpaketen bei der Übertragung in einem insbesondere im Ku- oder Ka-Band betriebenen und ACM unterstützenden digitalen Satellitenfunksystem zu schaffen, das fähig ist, für QoS-Garantien bei Einhaltung von Fehlerratengrenzen zu sorgen, ohne den potentiellen Kapazitätsgewinn aufzuheben, der durch ACM erreicht werden kann, und das darüber hinaus vorteilhafte Optimierungsmöglichkeiten bietet.

Gemäß der Erfindung, die sich auf ein Verfahren zum Scheduling von Datenpaketen und zur Erzeugung von Basisband-Rahmen aus diesen Datenpaketen für eine digitale Funkübertragung der eingangs genannten Art bezieht, wird diese Aufgabe dadurch gelöst, dass die zu sendenden Datenpakete nach Dienstgüteanforderungen klassifiziert werden, dass im Sender jedem zu übertragenden Datenpaket Informationskennungen hinzugefügt werden, von denen die erste Kennung eine Kennzeichnung für das zum Empfang dieses Datenpakets vorgesehene Nutzerendgerät ist und die zweite Kennung eine Nebenbedingung zum Gegenstand hat, welche die dem jeweiligen Datenpaket zugeordnete QoS-Anforderung bezeichnet, dass jedes der zu sendenden Datenpakete mit seinen Kennungen in einen von einem oder mehreren Datenpaket-Pools eingeordnet wird, dass aus dem Datenpaket-Pool bzw. aus den Datenpaket-Pools in einer Auswahlrunde mittels eines Datenpaketauswählers Datenpakete ausgewählt werden, wobei Datenpakete entweder entsprechend einer Nebenbedingung (Constraint-Mode) oder entsprechend einer ModCod-Vorgabe ausgewählt werden, wobei bei der Auswahl der Zustand einer nachfolgenden Enkapsulierungsstufe berücksichtigbar ist, dass die Datenpakete jeweils nach einer je nach vorgesehenem Enkapsulierungsverfahren optionalen Fragmentierung enkapsuliert und in den dem ModCod (Modulations- und Codierratensatz) des jeweiligen Datenpakets entsprechenden Basisband-Rahmen eingefügt werden, wobei hierzu die Kennzeichnung für das zum Empfang des Datenpakets vorgesehene Nutzerendgerät der Informationskennung des Datenpakets entnommen und damit der aktuell erforderliche ModCod dieses Nutzerendgeräts aus einer Datenbank ersehen wird, die für jedes aktive Nutzerendgerät den jeweils effizientesten für die Übertragung anwendbaren ModCod enthält, dass, falls der aktuelle Basisband-Rahmen für den betreffenden ModCod voll ist, ein neuer Basisband-Rahmen erzeugt wird, und dass die fertigen Basisband-Rahmen, die sowohl komplett oder teilweise gefüllt sein können, ausgewählt werden und an eine Codier- und Modulationseinheit zur Codierung und Modulierung entsprechend dem jeweiligen Modcod übergeben und nachfolgend an die Nutzerendgeräte übertragen werden.

Im Rahmen des Sortier- und Auswahl-Schedulings werden im Sender den zu übertragenden Datenpaketen zunächst Informationskennungen hinzugefügt, von denen die erste Kennung ("Target ID") eine Kennzeichnung für das zum Empfang dieses Datenpakets vorgesehene Nutzerendgerät ist. Zusätzlich wird diese Kennung als Zeiger, d.h. als Verweis zu einer Datenbank eingesetzt, die für jedes aktive Nutzerendgerät den jeweils effizientesten für die Übertragung von Datenpaketen anwendbaren ModCod, d.h. Modulations- und Codierratensatz, enthält. Die zweite Kennung hat eine Nebenbedingung zum Gegenstand, welche die dem jeweiligen Datenpaket zugeordneten QoS-Anforderungen bezeichnet. Die mit den Informationskennungen versehenen Datenpakete werden dann in einem im Sender enthaltenen Datenpaket-Pool gespeichert. Der aus dem Datenpaket-Pool austretende Datenpaketfluss wird durch einen Datenpaketauswähler kontrolliert, der pro Auswahlrunde die ausgehenden Datenpakete entweder entsprechend einer Nebenbedingungsvorgabe (Constraint-Mode) oder entsprechend einer ModCod-Vorgabe (ModCod-Mode) auswählt. Die Datenpakete des die jeweilige Vorgabe erfüllenden Satzes der gesammelten Datenpakete, der eine bestimmte Modulations- und Codierkonstellationsverteilung entsprechend den in der Datenbank enthaltenen ModCods für den Augenblick aufweist, werden über einen ModCod-Verteiler entsprechend den ModCods der Datenpakete nach optionaler Fragmentierung in die sogenannten Basisband-Rahmen (Baseband-Frames; BB-Frames) enkapsuliert, die den jeweiligen ModCods entsprechen. Die Basisband-Rahmen werden vor ihrer aufeinanderfolgenden Übertragung im TDM-Strom entsprechend jenem ModCod codiert und moduliert, der dem jeweiligen Basisband-Rahmen entspricht.

Durch die vorliegende Erfindung wird somit ein Verfahren zum Sortieren gepufferter Datenpakete und zum Auswählen jener Datenpakete vorgeschlagen, die im nächsten Basisband-Rahmen übertragen werden sollten, wobei die Maximierung der Übertragungseffizienz und QoS-Garantien und die Neutralität zwischen den Nutzern in einem System mit den vorstehend beschriebenen Eigenschaften berücksichtigt werden, d.h. gemeinsamer Breitband-Funkkanal in einer TDM-Betriebsweise und Unterstützung von ACM.

Das diesbezüglich hier als besonders vorteilhaft betrachtete Funkübertragungssystem ist die Abwärtsstrecke eines im Ku-Band (12-14 GHz) oder Ka-Band (20-40 GHz) arbeitenden, paketorientierten digitalen Satellitennetzes, wie z.B. ein Mehrstrahl-(Multi-Beam-)Breitband-Satellitenfunksystem, das mit dem vorhandenen DVB-S2-Standard (Digital Video Broadcasting - Satellite, Second Generation) verträglich ist, der im Einzelnen aus dem Beitrag von A. Morello, U. Reimers: "DVB-S2, the Second Generation Standard for Satellite Broadcasting and Unicasting", Int. Journ. Satell. Commun. Network, Vol. 22, Issue 3. Mai/Juni 2004, Seiten 249-268, und aus ETSI EN 302 307 "Digital video Broadcasting (DVB); Second generation framing structure, channel coding and modulation systems for Broadcasting, Interactive Services, News Gathering and other broadband satellite applications", hervorgeht.

Vorteilhafte und zweckmäßige Weiterbildungen des Verfahrens nach der Erfindung sind in den Unteransprüchen angegeben, die sich unmittelbar oder mittelbar auf den Patentanspruch 1 beziehen.

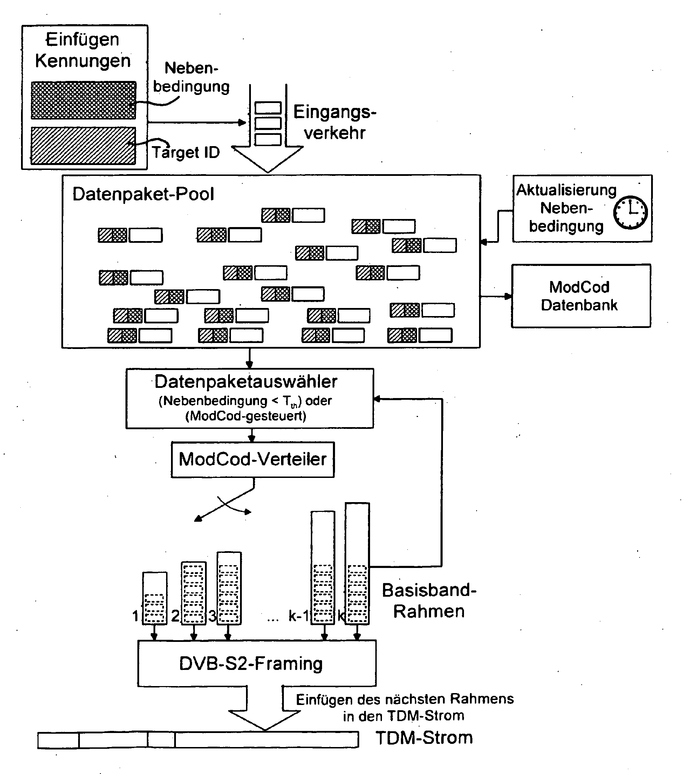

Die Erfindung wird nachfolgend anhand eines in einer Zeichnung dargestellten Ausführungsbeispiels erläutert. Die beigefügte Figur zeigt nach Art eines Blockschaltbildes die Architektur und die Betriebsweise des bei der Erfindung angewandten gruppeneffizienten Scheduling im Sender.

Die hier vorliegende und in der Figur in einem Ausführungsbeispiel dargestellte Erfindung definiert im Speziellen ein Verfahren zum Auswählen und Sortieren gepufferter Datenpakete zur Übertragung in einem Breitband-Satellitenfunkkanal im Ku-oder Ka-Band, der von mehreren Nutzern in einer TDM(Time Division Multiplex)-Betriebsweise geteilt wird, wobei der satellitenseitige Sender und die Empfänger in den Nutzerendgeräten ACM (Adaptive Coding and Modulation) auf einer Rahmen-zu-Rahmen-Basis unterstützen. Das Verfahren nach der vorliegenden Erfindung lässt sich als gruppeneffiziente Planung bezeichnen. Das Verfahren nach der vorliegenden Erfindung sieht QoS-Garantien vor, berücksichtigt aktuelle Physical Layer-Informationen, die sich auf die Nutzerendgeräte beziehen, die den gepufferten Verkehr empfangen sollten, und maximiert die Übertragungseffizienz der für die Übertragung ausgewählten Datenpakete,

Die Architektur und der Betrieb der gruppeneffizienten Übertragung im Sender sind in der beigefügten Figur zusammengefasst. Wenn die im Sender hereinkommenden und von diesem aus zu übertragenden Datenpakete als Eingangsverkehr am Sender ankommen, werden sie in einem Datenpaket-Pool gespeichert, nachdem ihnen vorher Informationskennungen hinzugefügt worden sind, welche die Anforderungen jedes Datenpakets zur Übertragung kennzeichnen.

Die erste Informationskennung ist eine so bezeichnete "Target ID", welche eine Kennzeichnung für das jeweilige Nutzerendgerät darstellt, das das jeweilige Datenpaket empfangen wird. Diese wird auch als Verweis zu einer Datenbank genutzt, die für jedes aktive Nutzerendgerät den effizientesten ModCod, d.h. Modulation und Codierrate, enthält, der für die Übertragung von Datenpaketen angewandt werden kann und die geforderte Bitfehlerrate garantiert. Dies bedeutet, dass dann, wenn ein Nutzerendgerät eine zur Umschaltung des ModCod ausreichende Kanalzustandsänderung erfährt, sich diese Datenbank und, da das Datenpaket mit dieser Information durch einen Zeiger, d.h. Verweis, verknüpft ist, das Datenpaket automatisch zum neuen ModCod in Bezug gesetzt wird Mit anderen Worten, die Datenpakete stehen immer in Bezug zur aktuellen ModCod-Information ihres Zielempfängers. Der Bezug zwischen den Datenpaketen und der Kanalzustandsinformation wird über die Target-ID-Kennung hergestellt.

Die zweite Informationskennung ist eine so bezeichnete "Nebenbedingung". Diese ist eine Kennung, welche die dem Datenpaket zugeordneten QoS-Anforderungen bezeichnet, die durch den Scheduler erfüllt werden sollen. Ein Beispiel für eine Nebenbedingung ist eine maximale Warteschlangenverzögerung. Es kann jedoch auch jede beliebige anders geartete Nebenbedingung angewandt werden.

Der aus dem Datenpaket-Pool austretende Fluss von Datenpaketen wird durch einen Datenpaketauswähler kontrolliert. Dieser Datenpaketauswähler hat zwei einstellbare Modi, nämlich eine Auswahl entsprechend der Nebenbedingung oder eine Auswahl entsprechend dem ModCod.

In dem in der Figur dargestellten Augenblick arbeitet der Datenpaketauswähler im "Nebenbedingungsmodus", d.h. er wählt in jeder Auswahlrunde alle Datenpakete zur übertragung aus, die eine gegebene Nebenbedingung erfüllen. Wenn beispielsweise die Nebenbedingung in einer maximalen Warteschlangenverzögerung besteht, sammelt der Datenpaketauswähler aus dem Datenpaket-Pool alle Datenpakete, die im Datenpaket-Pool eine längere Zeit als eine definierte Schwellwertzeit Tₜₕ warten. Es soll an dieser Stelle noch einmal angemerkt werden, dass außer den Verzögerungsgrenzen andere Nebenbedingungen angewendet werden kann.

Der Satz der in jeder Auswahlrunde gesammelten Datenpakete weist eine bestimmte Modulation und Codierkonstellationsvertcilung entsprechend den in der Datenbank enthaltenen ModCod-Zuständen für den Augenblick auf, in dem die Datenpakete gesammelt wurden. Ein ModCod-Verteiler enkapsuliert nach optionaler Fragmentierung die gesammelten Datenpakete entsprechend ihren neuesten ModCods in Basisband-Rahmen 1 ... k. Jeder der Basisband-Rahmen entspricht einem ModCod und hat genau die Kapazität, die dem jeweiligen ModCod entspricht. Auf diese Weise werden Datenpakete, die verschiedenen ModCods entsprechen, nicht in den Basisband-Rahmen gemischt, so dass eine ModCod-Verschlechterung nicht erforderlich ist. Wenn mehr Datenpakete, die einen bestimmten ModCod erfordern, in dem laufenden Datenpaketsatz vorhanden sind, als in einen Basisband-Rahmen passen, werden so viele Basisband-Rahmen aufgemacht, wie vom entsprechenden ModCod gefordert werden. Wenn ein oder mehrere Basisband-Rahmen nur zu einem kleinen Teil gefüllt sind, kann der Datenpaketauswähler im "ModCod-Modus" für jeden dieser Basisband-Rahmen wieder getriggert werden, d.h. um ausreichend Datenpakete des betreffenden ModCods auszuwählen. Mit dieser Operation wird die Nutzlast (Payload) der Basisband-Rahmen auf das Maximum aufgefüllt.

Nach der Enkapsulierung der Datenpakete entsprechend ihren ModCods werden die Basisband-Rahmen unter Verwendung einer beliebigen Scheduling-Technik von niedriger Komplexität, z.B. Round Robin (RR), gewichtetes Round Robin (Weighted Round Robin; WRR) oder irgendeiner anderen Technik, ausgewählt und weiter für die Übertragung verarbeitet, d.h. an die Funktion für das DVB-S2-Framing in Schicht 2 gesendet. Die gebildeten Basisband-Rahmen werden nacheinander in den TDM-Strom zur Übertragung in der physikalischen Schicht eingefügt.

Der Datenpaketauswähler wird entweder direkt, nachdem alle Rahmen übertragen worden sind, oder, wenn eine Periodizitätsnebenbedingung danach ruft, wieder aktiviert.

Das durch die vorliegende Erfindung vorgeschlagene Verfahren gewährleistet einerseits QoS, da die Datenpaketauswahl zur Übertragung auf QoS-Nebenbedingungen beruht, und es garantiert Fehlerratengrenzen, da die sich auf jedes Datenpaket beziehende ModCod-Information stets aktuell ist.

Andererseits wird die Übertragungseffizienz für die Konstellation gesammelter Datenpakete infolge zweier Hauptgründe maximiert.

Die spektrale Effizienz wird maximiert, da Datenpakete mit verschiedenen ModCods in Rahmen nicht gemischt werden, so dass eine ModCod-Verschlechterung für zu berücksichtigende Fehlerratenobergrenzen nicht erforderlich ist.

Die Basisband-Rahmen-Effizienz wird bei gegebenen gesammelten Datenpaketen in der Auswahlrunde maximiert, da Rahmen bis zum möglichen Maximum mit der verfügbaren Konstellation gefüllt werden.

Das Verfahren nach der vorliegenden Erfindung lässt sich bei insbesondere im Ku- oder Ka-band betriebenen Satellitenfunksystemen mit gemeinsamer Vorwärtsverbindung in TDM-Betriebsweise und mit Unterstützung von ACM (Adaptive Coding and Modulation) sowie QoS-Garantien anwenden. Jede beliebige Art von Eingangsverkehr ist bei der vorliegenden Erfindung anwendbar.

## Patentansprüche

1. Verfahren zum Scheduling von Datenpaketen und zur Erzeugung von Basisband-Rahmen; Baseband-Frames; BB-Frames aus diesen Datenpaketen für eine Übertragung mittels Funk zwischen einem Sender und mehreren empfangenden Nutzerendgeräten, wobei der Sender sowie die empfangenden Nutzerendgeräte ACM; Adaptive Coding and Modulation auf einer Rahmen-zu-Rahmen-Basis unterstützen und geforderte QoS; Quality of Service; Dienstgüte-Garantien eingehalten und die erzeugten Basisband-Rahmen im TDM; Time Division Multiplex; Zeitmultiplex gesendet werden, **dadurch gekennzeichnet, dass** die zu sendenden Datenpakete nach Dienstgüteanforderungen klassifiziert werden, dass im Sender jedem zu übertragenden Datenpaket Informationskennungen hinzugefügt werden, von denen die erste Kennung eine Kennzeichnung für das zum Empfang dieses Datenpakets vorgesehene Nutzerendgerät ist und die zweite Kennung eine Nebenbedingung zum Gegenstand hat, welche die dem jeweiligen Datenpaket zugeordnete QoS-Anforderung bezeichnet, dass jedes der zu sendenden Datenpakete mit seinen Kennungen in einen von einem oder mehreren Datenpaket-Pools eingeordnet wird, dass aus dem Datenpaket-Pool bzw. aus den Datenpaket-Pools in einer Auswahlrunde mittels eines Datenpaketauswählers Datenpakete ausgewählt werden, wobei Datenpakete entweder entsprechend einer Nebenbedingung: Constraint-Mode oder entsprechend einer ModCod-Vorgabe ausgewählt werden, wobei bei der Auswahl der Zustand einer nachfolgenden Enkapsulierungsstufe berücksichtigbar ist, dass die Datenpakete jeweils nach einer je nach vorgesehenem Enkapsulierungsverfahren optionalen Fragmentierung enkapsuliert und in den dem ModCod; Modulations- und Codierratensatz des jeweiligen Datenpakets entsprechenden Basisband-Rahmen eingefügt werden, wobei hierzu die Kennzeichnung für das zum Empfang des Datenpakets vorgesehene Nutzerendgerät der Informationskennung des Datenpakets entnommen und damit der aktuell erforderliche ModCod dieses Nutzerendgeräts aus einer Datenbank ersehen wird, die für jedes aktive Nutzerendgerät den jeweils effizientesten für die Übertragung anwendbaren ModCod enthält, dass, falls der aktuelle Basisband-Rahmen für den betreffenden ModCod voll ist, ein neuer Basisband-Rahmen erzeugt wird, und dass die fertigen Basisband-Rahmen, die sowohl komplett oder teilweise gefüllt sein können, ausgewählt werden und an eine Codier- und Modulationseinheit zur Codierung und Modulierung entsprechend dem jeweiligen Modcod übergeben und nachfolgend an die Nutzerendgeräte übertragen werden.

2. Verfahren nach Anspruch 1, **dadurch gekennzeichnet, dass** die zu sendenden und mit Informationskennungen versehenen Datenpakete in einen von einem oder mehreren Datenpaket-Pools abgelegt werden, die einen wahlfreien, iterativen oder assoziativen Zugriff auf die darin enthaltenen Datenpakete ermöglichen, wobei sich der wahlfreie Zugriff dadurch auszeichnet, dass jedes beliebige, im Datenpaket-Pool befindliche Datenpaket betrachtbar oder entnehmbar ist, der iterative.Zugriff dadurch, dass die im Datenpaket-Pool befindlichen Datenpakete eines nach dem anderen in einer durch ein oder mehrere Sortierkriterien bestimmten Reihenfolge betrachtbar oder entnehmbar sind, und der assoziative Zugriff dadurch, dass eine Menge von Datenpaketen gleichzeitig nach einem oder mehreren Kriterien auswählbar oder entnehmbar sind, wobei ein Datenpaket-Pool mindestens eines dieser drei Zugriffsverfahren, aber nicht notwendigerweise alle gewährleistet.

3. Verfahren nach Anspruch 1, **dadurch gekennzeichnet, dass** die Datenbank, die den für jedes Nutzerendgerät erforderlichen ModCod enthält, durch Signalisierungsnachrichten des jeweiligen Nutzerendgeräts fortlaufend aktualisiert wird.

4. Verfahren nach Anspruch 1, **dadurch gekennzeichnet, dass** bei Nichtüberschreitung eines Schwellenwertes des Füllgrades der aktuellen Basisband-Rahmen für einen oder mehrere ModCods der Datenpaketauswähler wiedergetriggert wird, um ausreichend Datenpakete des bzw. der betreffenden ModCods auszuwählen, so dass mit dieser Operation die Nutzlast; Payload der Basisband-Rahmen auf das Maximum gefüllt wird, wobei hierbei alle in den Datenpaketpools verbliebenen Datenpakete in Betracht kommen.

5. Verfahren nach Anspruch 1, **dadurch gekennzeichnet, dass** die Auswahl von Datenpaketen.aus dem Datenpaket-Pool bzw. den Datenpaket-Pools während einer Auswahlrunde entweder direkt, nachdem alle Datenpakete der vorhergehenden Auswahlrunde codiert, moduliert und übertragen worden sind, oder, wenn eine Periodizitätsnebenbedingung danach ruft, wieder aktiviert wird.

6. Verfahren nach Anspruch 1, **dadurch gekennzeichnet, dass** die Erzeugung von Basisband-Rahmen aus Datenpaketen integriert mit der Datenpaketauswahl vorgenommen wird, wodurch die Datenpaketauswahl Zustandsinformationen einer die Basisband-Rahmen bildenden Erzeugungsstufe verwenden kann, die ihrerseits aus einem optionalen Datenpaketfragmentierungschritt, einem Enkapsulierungsschritt und dem Einfügen in den Basisband-Rahmen besteht.

7. Verfahren nach einem der vorhergehenden Ansprüche, **gekennzeichnet durch** die Anwendung auf satellitenseitig gesendete Datenpakete zur Übertragung in der Abwärtsstreckenrichtung eines digitalen Satellitenfunknetzes zu den empfangenden Nutzerendgeräten.

## Claims

1. Method for scheduling data packets and for generating baseband frames (BB frames) from these data packets for radio transmission between a transmitter and a plurality of receiving user terminals, wherein the transmitter and the receiving user terminals support ACM (Adaptive Coding and Modulation) on a frame-to-frame basis and required QoS warranties (Quality of Service) are observed and the generated baseband frames are transmitted in TDM (Time Division Multiplex), **characterized in that** the data packets to be transmitted are classified by quality of service requirements, that, in the transmitter, an information identifier is added to each data packet to be transmitted, of which the first identifier identifies the user terminal intended to receive this data packet and the second identifier refers to a side condition that identifies a respective QoS requirement associated with a respective data packet, that each of the data packets to be transmitted together with its identifiers is classed in one of one or a plurality of data packet pools, that data packets are selected from the data packet pool or the data packet pools in a selection turn using a data packet selector, wherein data packets are selected either according to a side condition (Constraint Mode) or according to a ModCod default, wherein the state of a subsequent encapsulation stage can be taken into account in the selection, that the data packets are each encapsulated, after a fragmentation that is optional depending on the encapsulation method provided, and inserted into the baseband frame corresponding to the ModCod (modulation and code rate set) of the respective data packet, wherein, for that purpose, the identifier of the user terminal intended to receive the data packet is taken from the information identifier of the data packet and the presently required ModCod of this user terminal is thereby determined from a data base that includes, for each active user terminal, the respective most efficient ModCod applicable for transmission, that, if the present baseband frame for the respective ModCod is full, a new baseband frame is generated, and that the finished baseband frames, which may either be completely or partly filled, are selected and transferred to a coding and modulation unit for coding and modulation according to the respective ModCod and are subsequently transmitted to the user terminals.

2. Method according to claim 1, **characterized in that** the data packets to be transmitted and which are provided with information identifiers are stored in one of one or a plurality of data packet pools allowing a random, iterative or associative access to the data packets contained therein, wherein the random access is **characterized by** the fact that any optional data packet in the data packet pool can be observed or taken therefrom, the iterative access is **characterized by** the fact that the data packets in the data packet pool can be observed or taken therefrom one by one according to an order determined by one or a plurality of sorting criteria, and the associative access is **characterized by** the fact that a number of data packets can be observed or taken at the same time according to one or a plurality of criteria, wherein a data packet pool guarantees at least one of these three access methods, but not necessarily all of them.

3. Method according to claim 1, **characterized in that** the data base containing the ModCod required for each user terminal is continually updated by signalling messages of the respective user terminal.

4. Method according to claim 1, **characterized in that** if the threshold value of the degree of filling of the present baseband frames for one or a plurality of ModCods is not exceeded, the data packet selector is retriggered to select a sufficient number of data packets of the respective ModCod or ModCods, so that by this operation the payload of the baseband frames is filled to the maximum, wherein all of the data packets remaining in the data packet pools are candidates.

5. Method according to claim 1, **characterized in that** the selection of data packets from the data packet pool or the data packet pools in a selection turn is reactivated either immediately after all data packets of the previous selection turn have been coded, modulated and transmitted, or when an intermittency side condition calls for such reactivation.

6. Method according to claim 1, **characterized in that** the generation of baseband frames from data packets is performed integrated with the data packet selection, whereby the data packet selection may use state information of a generation stage forming the baseband frames, which in turn consists of an optional data packet fragmentation step, an encapsulation step and the insertion into the baseband frame.

7. Method according to one of the preceding claims, **characterized by** the application to satellite-transmitted data packets for transmission in the downlink direction of a digital satellite radio network to the receiving user terminals.

## Revendications

1. Procédé d'ordonnancement de paquets de données et de création de trames de bande de base (baseband frames, BB frames), provenant de ces paquets de données pour une transmission radio entre un transmetteur et plusieurs terminaux d'utilisateur récepteurs, le transmetteur ainsi que les terminaux d'utilisateur récepteurs supportant ACM (Adaptive Coding and Modulation) sur une base de trame à trame et les garanties demandées de qualité de service (Qos, Quality of Service) étant respectées et les trames de bande de base générées étant transmises par multiplexage temporel TDM (Time Division Multiplex), **caractérisé en ce que** les paquets de données à transmettre sont classés selon des demandes de qualité de service, que, dans le transmetteur, des identificateurs d'information sont ajoutés à chaque paquet de données à transmettre, dont le premier identificateur est un spécificateur du terminal d'utilisateur envisagé de recevoir ce paquet de données et le deuxième identificateur a pour objet une condition secondaire identifiant la demande QoS associée au paquet de données respectif, que chaque paquet de données à transmettre, avec ses identificateurs, est rangé dans un d'un pool ou plusieurs pools de paquets de données, que, dans un tour de sélection, un sélecteur de paquets de données sélectionne des paquets de données dans ledit pool de paquets de données ou lesdits pools de paquets de données, les paquets de données étant sélectionnés selon une condition secondaire (Constraint Mode) ou selon un ModCod de défault, il étant possible pendant la sélection de prendre en compte l'état d'une étage d'encapsulation suivante, que les paquets de données respectifs sont encapsulés après une fragmentation, facultative dépendant du procédé d'encapsulation prévu, et sont insérés dans la trame de bande de base correspondant au ModCod (taux de modulation et de codage) du paquet de données respectif, le spécificateur du terminal d'utilisateur envisagé de recevoir ledit paquet de données étant pour cela déduit dudit identificateur d'information dudit paquet de données et le ModCod actuellement nécessaire de ce terminal d'utilisateur étant ainsi trouvé dans une base de données qui contient, pour chaque terminal d'utilisateur actif, le ModCod respectif le plus efficient, applicable pour la transmission, que, si la trame de bande de base actuelle pour le ModCod respectif serait remplie, une nouvelle trame de bande de base est créée, et que les trames de bande de base finies, qui peuvent être complètement ou partiellement remplies, sont sélectées et transférées à une unité de codage et de modulation pour un codage et une modulation correspondant au ModCod respectif et sont ensuite transmises au terminaux d'utilisateur.

2. Procédé selon la revendication 1, **caractérisé en ce que** les paquets de données à transmettre et prévus d'identificateurs d'information sont stockés dans un dudit un ou desdits plusieurs pools de paquets de données permettant un accès aléatoire, itératif ou associatif, l'accès aléatoire étant **caractérisé par le fait que** chaque paquet de données optionnel dans le pool de paquets de données peut être observé ou enlevé, l'accès itératif étant **caractérisé par le fait que** les paquets de données dans le pool de paquets de données peuvent être observés ou enlevés l'un après l'autre selon un ordre déterminé par un ou plusieurs critères de triage, et l'accès associatif est **caractérisé par le fait qu'**une nombre de paquets de données peut être observée ou enlevée simultanément selon une ou plusieurs critères, un pool de paquets de données permettant au moins une de ces trois méthodes d'accès, mais non nécessairement toutes.

3. Procédé selon la revendication 1, **caractérisé en ce que** la base de données contenant le ModCod nécessaire pour chaque terminal d'utilisateur est actualisée continûment par des messages de signalisation provenant du terminal d'utilisateur.

4. Procédé selon la revendication 1, **caractérisé en ce que**, si une valeur de seuil du degré de remplissage des trames de bande de base actuelles pour un ou plusieurs ModCods n'est pas surpassée, le sélecteur de paquets de données est réactivé afin de sélectionner assez paquets de données du ModCod respectif ou des ModCods respectifs de manière á ce que par cette opération, la charge utile (payload) des trames de bande de base soit remplie au maximum, tous les paquets de données restant dans les pools de paquets de données étant qualifiés à cette fin.

5. Procédé selon la revendication 1, **caractérisé en ce que** la sélection de paquets de données dans le pool de paquets de données ou les pools de paquets de données dans un tour de sélection est réactivée directement, après tous les paquets de données du tour de sélection précédent sont codés, modulés et transmis, ou si une condition secondaire de périodicité le requiert.

6. Procédé selon la revendication 1, **caractérisé en ce que** la génération de trames de bande de base à partir de paquets de données est effectuée de manière intégrée dans la sélection de paquets de données, la sélection de paquets de données ainsi pouvant utiliser des informations d'état d'une étage génératrice formant les trames de bande de base, l'étage elle-même étant constituée par une étape optionnelle de fragmentation de paquets de données, une étape d'encapsulation et l'insertion dans la trame de bande de base.

7. Procédé selon l'une des revendications précédentes, **caractérisé par** l'application aux paquets de données transmis par satellite pour transmission dans la direction satellite-terre d'un réseau radio satellite aux terminaux d'utilisateur récepteurs.
